# FASCICULE DE BREVET EUROPEEN

(11) **EP 4 003 758 B1**
(45) Date de publication et mention de la délivrance du brevet: **11.10.2023**
(21) Numéro de dépôt: 20750699.9
(22) Date de dépôt: 07.07.2020
(51) Int. Cl.: B60C 9/18, B60C 9/20, B60C 9/00

(54) **PNEUMATIQUE POUR VEHICULE LOURD DE TYPE GENIE CIVIL AVEC UNE ARMATURE SOMMET SIMPLIFIEE**
REIFEN FÜR EIN HOCH- UND TIEFBAU-SCHWERLASTFAHRZEUG MIT VEREINFACHTER GÜRTELVERSTÄRKUNG
TYRE FOR A HEAVY CIVIL-ENGINEERING VEHICLE WITH A SIMPLIFIED CROWN REINFORCEMENT

(30) Priorité: 23.07.2019 FR 1908339
(43) Date de publication de la demande: 01.06.2022
(73) Titulaire: COMPAGNIE GENERALE DES ETABLISSEMENTS MICHELIN, 63000 Clermont-Ferrand (FR)
(72) Inventeur: CLEMENT, Emmanuel, 63040 CLERMONT-FERRAND Cedex 9 (FR); LHOSPITALIER, Sylvie, 63040 CLERMONT-FERRAND Cedex 9 (FR)
(74) Mandataire: Le Cam, Stéphane Georges Elie
(86) Numéro de dépôt international: PCT/FR2020/051205
(87) Numéro de publication internationale: WO 2021/014065

(56) Documents cités:
- WO-A1-2016/184756
- US-A1- 2006 032 570

## Description

La présente invention a pour objet un pneumatique radial, destiné à équiper un véhicule lourd de type génie civil, et concerne plus particulièrement l'armature de sommet d'un tel pneumatique.

Typiquement ce pneumatique radial pour véhicule lourd de type génie civil, au sens de la norme de la European Tyre and Rim Technical Organisation ou ETRTO, est destiné à être monté sur une jante dont le diamètre est au moins égal à 20 pouces.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. La direction circonférentielle est tangente à la circonférence du pneumatique.

Dans ce qui suit, les expressions «radialement intérieur», respectivement «radialement extérieur» signifient «plus proche », respectivement «plus éloigné de l'axe de rotation du pneumatique». Par «axialement intérieur», respectivement «axialement extérieur», on entend «plus proche», respectivement «plus éloigné du plan équatorial du pneumatique», le plan équatorial du pneumatique étant le plan passant par le milieu de la surface de roulement et perpendiculaire à l'axe de rotation.

De façon générale un pneumatique comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de carcasse d'un pneumatique radial pour véhicule lourd de type génie civil comprend habituellement au moins une couche de carcasse comprenant des renforts généralement métalliques, enrobés par un matériau polymérique de type élastomère ou élastomérique, obtenu par mélangeage et appelé mélange d'enrobage. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Les renforts métalliques d'une couche de carcasse sont sensiblement parallèles entre eux et forment, avec la direction circonférentielle, un angle compris entre 85° et 95°.

L'armature de sommet d'un pneumatique radial pour véhicule lourd de type génie civil comprend une superposition de couches de sommet s'étendant circonférentiellement, radialement à l'extérieur de l'armature de carcasse. Chaque couche de sommet est constituée de renforts généralement métalliques, parallèles entre eux et enrobés par un matériau polymérique de type élastomère ou mélange d'enrobage.

Parmi les couches de sommet, on distingue usuellement les couches de protection, constitutives de l'armature de protection et radialement les plus à l'extérieur, et les couches de travail, constitutives de l'armature de travail et radialement comprises entre l'armature de protection et l'armature de carcasse.

L'armature de protection, comprenant au moins une couche de protection, protège essentiellement les couches de travail des agressions mécaniques ou physico-chimiques, susceptibles de se propager à travers la bande de roulement radialement vers l'intérieur du pneumatique.

L'armature de protection comprend souvent deux couches de protection, radialement superposées, formées de renforts métalliques élastiques, parallèles entre eux dans chaque couche et croisés d'une couche à la suivante, en formant, avec la direction circonférentielle, des angles au moins égaux à 10° et au plus égaux à 35°.

L'armature de travail, comprenant au moins deux couches de travail, a pour fonction de ceinturer le pneumatique et de lui conférer de la rigidité et de la tenue de route. Elle reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande roulement. Elle doit en outre résister à l'oxydation et aux chocs et perforations, grâce à sa conception intrinsèque et à celle de l'armature de protection.

L'armature de travail comprend usuellement deux couches de travail, radialement superposées, formées de renforts métalliques non extensibles, parallèles entre eux dans chaque couche et croisés d'une couche à la suivante, en formant, avec la direction circonférentielle, des angles au plus égaux à 60°, et, de préférence, au moins égaux à 15° et au plus égaux à 45°.

Pour diminuer les sollicitations mécaniques de gonflage transmises à l'armature de travail, il est connu de disposer, radialement à l'extérieur de l'armature de carcasse, une armature de frettage. L'armature de frettage, dont la fonction est de reprendre au moins en partie les sollicitations mécaniques de gonflage, améliore l'endurance de l'armature de sommet par une rigidification de l'armature de sommet. L'armature de frettage peut être positionnée radialement à l'intérieur de l'armature de travail, entre les deux couches de travail de l'armature de travail, ou radialement à l'extérieur de l'armature de travail.

L'armature de frettage comprend usuellement deux couches de frettage, radialement superposées, formées de renforts métalliques, parallèles entre eux dans chaque couche et croisés d'une couche à la suivante, en formant, avec la direction circonférentielle, des angles au plus égaux à 10°.

En ce qui concerne les renforts métalliques, un renfort métallique est caractérisé mécaniquement par une courbe représentant la force de traction (en N), appliquée au renfort métallique, en fonction de son allongement relatif (en %), dite courbe force-allongement. De cette courbe force-allongement sont déduites des caractéristiques mécaniques en traction du renfort métallique, telles que l'allongement structural As (en %), l'allongement total à la rupture At (en %), la force à la rupture Fm (charge maximale en N) et la résistance à la rupture Rm (en MPa), ces caractéristiques étant mesurées selon la norme ISO 6892 de 1984.

L'allongement total à la rupture At du renfort métallique est, par définition, la somme de ses allongements structural, élastique et plastique (At = As + Ae + Ap). L'allongement structural As résulte du positionnement relatif des fils métalliques constitutifs du renfort métallique sous un faible effort de traction. L'allongement élastique Ae résulte de l'élasticité même du métal des fils métalliques, constituant le renfort métallique, pris individuellement, le comportement du métal suivant une loi de Hooke. L'allongement plastique Ap résulte de la plasticité, c'est-à-dire de la déformation irréversible, au-delà de la limite d'élasticité, du métal de ces fils métalliques pris individuellement. Ces différents allongements ainsi que leurs significations respectives, bien connus de l'homme du métier, sont décrits, par exemple, dans les documents US5843583, WO2005/014925 et WO2007/090603.

On définit également, en tout point de la courbe contrainte-déformation d'un renfort métallique, un module en extension, exprimé en GPa, qui représente la pente de la droite tangente à la courbe contrainte-deformation en ce point. En particulier, on appelle module élastique en extension ou module d'Young, le module en extension de la partie linéaire élastique de la courbe contrainte-déformation.

Parmi les renforts métalliques, on distingue usuellement les renforts métalliques élastiques, tels que ceux utilisés dans les couches de protection, et les renforts métalliques non extensibles ou inextensibles, tels que ceux utilisés dans les couches de travail.

Un renfort métallique élastique est caractérisé par un allongement structural As au moins égal à 0.4 % et un allongement total à rupture At au moins égal à 3 %. En outre, un renfort métallique élastique a un module élastique en extension au plus égal à 130 GPa, et compris usuellement entre 40 GPa et 130 GPa.

Un renfort métallique non extensible est caractérisé par un allongement, sous une force de traction égale à 10% de la force à rupture Fm, au plus égal à 0.2 %. Par ailleurs, un renfort métallique non extensible a un module élastique en extension supérieur à 140 GPa.

Une couche composée de renforts métalliques enrobés dans un mélange élastomérique est dite « rigide » si les renforts sont non extensibles au sens vu ci-dessus. La couche est dite "bas module" relativement à la couche rigide si les renforts sont élastiques comme définis ci-dessus.

La rigidité d'indentation d'un pneumatique est une grandeur physique qui traduit la résistance du sommet à la perforation lors du roulage sur un indenteur, comme un rocher par exemple, avec une taille de plusieurs dizaines de centimètres. Plus la rigidité d'indentation est faible et plus le sommet est performant pour absorber les obstacles.

Pour mesurer la rigidité d'indentation d'un pneumatique, on réalise un test de roulage sur des obstacles normalisés. Ces obstacles sont des polars à tête hémisphérique de diamètres et de hauteurs variables. Typiquement, le diamètre du polar varie de 0.5 pouces à 3 pouces, pour une hauteur comprise 25 mm à 400 mm. Le pneumatique est gonflé, monté sur la jante d'un véhicule de type Dumper. On réalise plusieurs passages successifs sur le polar en augmentant progressivement leur hauteur. Le test s'achève quand en roulant sur un polar suffisamment haut on finit par perforer le sommet du pneumatique testé.

Le test de "breaking energy" tel que défini par exemple dans le règlement FMVSS 119 des Etats unis d'Amérique sur la sécurité des pneumatiques permet de quantifier la résistance du sommet d'un pneumatique à la perforation. C'est un test sur machine, qui consiste à enfoncer un polar dans le sommet d'un pneumatique gonflé et monté sur jante. L'opération est répétée plusieurs fois en différents points au centre de la bande de roulement. La force d'enfoncement radiale et la profondeur de pénétration sont mesurées pour calculer l'énergie de pénétration qui doit être inférieure à un seuil fixé par le règlement en fonction de la dimension et des spécifications du pneumatique étudié. Les polars sont à tête hémisphérique de diamètre variable en fonction de la dimension pneumatique. Typiquement, le diamètre du polar varie de 0.5 à 3 pouces pour les dimensions considérées ici.

A titre indicatif, une dimension désignée selon la norme ETRTO 29.5R25, destinée à porter une charge de 14000 kilos à une pression de 450 Pa comprend au plus sept couches d'armature de sommet formées de renforts métalliques enrobés dans un mélange élastomérique.

Les coûts de fabrication et de matière d'un tel pneu sont relativement élevés en raison de la complexité de l'architecture et au grand nombre de composants nécessaires pour le produire. Les documents WO 2016/184756A1 et US 2006/032570A1 divulguent de tels pneumatiques.

Les inventeurs se sont donnés pour objectif de simplifier l'architecture d'un pneumatique radial pour véhicule lourd de type génie civil, avec la cible de réduire la masse d'au moins 7% sans dégrader la performance d'endurance du pneumatique.

Cet objectif a été atteint par un pneumatique pour véhicule lourd de type génie civil comprenant radialement de l'extérieur vers l'intérieur:
a) au moins une couche, ci-après désignée "couche bas module", formée de renforts métalliques élastiques dits de bas module, enrobés dans un matériau élastomérique, parallèles entre eux et formant, avec une direction circonférentielle (XX') tangente à la circonférence du pneumatique un angle Alpha1, lesdits renforts de bas module ayant un allongement structural au moins égal à 0.4%, et un allongement total à rupture au moins égal à 3%, et le module élastique en extension de ces renforts étant compris entre 40 GPa et 130 GPa ;
b) au moins une couche, ci-après désignée "couche rigide", formée de renforts métalliques rigides, enrobés dans un matériau élastomérique, parallèles entre eux et formant, avec une direction circonférentielle (XX') tangente à la circonférence du pneumatique, un angle Alpha2, l'allongement structural des renforts métalliques rigides, sous une force de traction égale à 10% de la force à rupture, étant inférieure ou égale à 0.2 % et le module élastique en extension des renforts rigides étant compris entre 140 GPa et 200 GPa
c) la couche rigide a une tension à rupture supérieure ou égale à 120 daN/mm, le rapport de la tension de rupture de la couche rigide sur celle de la couche bas module est supérieur ou égal à 1.2,
d) la couche bas module a une tension à rupture supérieure ou égale à 80 daN/mm,
e) au moins une couche bas module est en contact avec au moins une couche rigide sur une largeur axiale W au moins égale à 20 % de la section nominale B du pneumatique au sens de la norme ETRTO.

L'idée principale de l'invention est de constituer un composite multicouche avec une couche rigide et une couche bas module comme un élément de base de l'architecture du sommet. En fonction de l'utilisation prévue du pneumatique, une couche de triangulation, comprenant des renforts formant avec la direction circonférentielle un angle au moins égal à 50°, ou encore une armature de frettage, constituée d'au moins une couche de frettage comprenant des renforts formant avec la direction circonférentielle un angle au plus égal à 10°, peuvent venir compléter l'élément de base.

La couche rigide la plus radialement intérieure est renforcée en terme de dimensionnement pour se substituer aux deux couches de travail de l'armature de travail usuelle. La couche bas module radialement extérieure, la plus proche de la bande de roulement, se substitue aux deux couches de protection de l'armature de protection usuelle. Par conséquent, l'invention est une simplification des architectures de sommet classiques comprenant généralement au moins cinq couches de sommet nécessaires pour obtenir un fonctionement équivalent du pneumatique.

Le même mélange d'enrobage est utilisé pour la couche rigide et pour la couche bas module. L'épaisseur du mélange d'enrobage entre les deux couches, les angles des renforts de chaque couche, et les modules d'Young des renforts sont choisis de manière à assurer le couplage mécanique des deux couches.

L'état de couplage mécanique du multicouche est réalisé quand le cisaillement du mélange d'enrobage de la couche rigide et de la couche bas module dans le plan méridien du pneumatique est nul. La tension dans les renforts des deux couches atteint alors sa valeur maximale. La tension dans les renforts varie de la valeur nulle aux extrémités axiales des couches à la valeur maximale possible selon la distance de couplage.

Lors du gonflage du pneumatique monté sur sa jante, une montée homogène du profil du sommet dans le plan méridien est déterminante pour les performances du pneumatique notamment pour la forme d'usure de la bande de roulement qui doit être le plus uniforme possible. L'ajustement des rigidités radiales en lien avec le couplage mécanique des couches rigide et de bas module est donc prépondérant pour garantir les performances du pneumatique.

Selon l'invention, la tension de rupture de la couche rigide est supérieure ou égale à 120 daN/mm.

Un pneu radial soumis à sa pression de gonflage génère des tensions méridiennes qui sont reprises par les renforts de l'armature de carcasse radiale qui par cisaillement du mélange d'enrobage transmet les tensions aux renforts de l'armature de sommet. La couche de sommet la plus radialement intérieure est renforcée de manière à ce que la tension de rupture de la couche soit supérieure ou égale 120 daN/mm. Le dimensionnement du pneumatique de l'invention avec un plus petit nombre de couches de sommet doit lui permettre de résister à la pression de gonflage avec une marge de sécurité suffisante.

Toujours selon l'invention, la tension de rupture de la couche bas module est supérieure ou égale à 80 daN/mm.

La tension de rupture de la couche bas module doit être supérieure à un seuil, qui, selon les inventeurs, est égal à 80 daN/mm. Cette contrainte est vérifiée pour des câbles élastiques d'assemblage 24.26, c'est-à-dire des câbles constitués de 24 fils de 26 centième de millimètre chacun.

Ces niveaux de tensions déterminent la plage de fonctionnement de l'invention.

Encore selon l'invention, le rapport de la tension de rupture de la couche rigide sur celle de la couche bas module est supérieur ou égal à 1.2, préférentiellement supérieur ou égal à 1.4

L'invention définie une armature de sommet comprenant une couche rigide opposée à une couche bas module. Ce choix de conception résulte du compromis trouvé pour avoir suffisament de rigidité de dérive pour le fonctionnement en treansersal du pneumatique tout ayant une couche de protection élastique relativement souple pour protéger le sommet. La couche de bas module joue un rôle double : dans un premier temps cette couche couple avec la couche rigide pour obtenir le niveau de rigidité nécessaire qui contribue au guidage du véhicule, et dans un deuxième temps ladite couche bas module protège le sommet en étant suffisamment élastique pour se former lors du roulage sur des obstacles. Les inventeurs ont observé que pour assurer dans des conditions satisfaisantes ces deux fonctions, le rapport de la tension dans la couche rigide sur celle de la couche de bas module doit être égal à 1.2.

Selon l'invention, au moins une couche bas module est en contact avec au moins une couche rigide sur une largeur axiale W au moins égale à 20 % de la section nominale B du pneumatique au sens de la norme ETRTO

Les couches rigide et de bas module sont mises en contact pour parvenir à un couplage mécanique entre les deux couches qui correspond à l'état de contrainte maximale des renforts dans le plan méridien. La contrainte dans les renforts est reliée à la variation des cisaillements dans le mélange d'enrobage de la couche. La contrainte croît continuement de l'extrémité axiale de la couche où elle est nulle jusqu'à une valeur maximale atteinte à partir d'une certaine position axiale sur les couches. La distance parcourue pour atteindre la valeur maximale de la contrainte est la distance de couplage. La largeur de la couche de bas module doit être suffisante pour permettre d'atteindre le couplage mécanique.

La distance de couplage dépend de plusieurs paramètres mécaniques comme les modules d'élasticité en extension des renforts, du module de cisaillement du mélange d'enrobage. Les inventeurs ont établi que si les couches rigide et de bas module sont en contact sur une distance au moins égale à 20 % de la largeur nominale du pneumatique, alors le couplage entre les deux couches peut être atteint.

Il est avantageux que la couche rigide comprenne des renforts comprenant un fil de frette de diamètre réduit, entre 0.10 mm et 0.3 mm, enroulé en hélice sur la surface externe du renfort.

Un pneumatique du génie civil en roulage génère des contraintes de flambement dans les câbles de la nappe carcasse, qui sont fortement fléchis, de telle manière qu'ils tendent à flamber, ce qui entraîne une augmentation de la courbure des fils unitaires provoquant la rupture des fils. Ces câbles peuvent alors se rompre prématurément, déterminant ainsi la limite d'endurance en roulage du pneumatique. Tout comme pour la couche de carcasse, la couche rigide reprend la solution du frettage par un fil de diamètre réduit entre 0.10 mm et 0.3 mm pour améliorer sa performance d'endurance.

Selon un mode de réalisation de l'invention, la couche bas module est positionnée extérieurement à la couche rigide dans la direction radiale.

La couche la plus souple est positionnée radialement le plus proche de la bande de roulement. Ladite couche contribue à obtenir un niveau de rigidité d'indentation qui permet une déformabilité du sommet de manière à absorber les obstacles sur les pistes lors du roulage du pneumatique.

Avantageusement, la largeur axiale de la couche bas module est supérieure à la largeur axiale de la couche rigide d'une distance DNT au moins égale à 10 mm à chaque extrémité axiale.

Les extrémités des renforts des couches sont des singularités mécaniques avec des conditions de contraintes nulles, et des cisailements de grande amplitude. Lesdites extrémités sont donc étalées par pas de 10 mm au moins dans la direction axiale de manière à éviter leur coïncidence dans un même plan méridien.

Selon un mode de réalisation de l'invention, une couche supplémentaire de triangulation, comprenant des renforts métalliques, enrobés dans un matériau élastomérique, parallèles entre eux et formant, avec une direction circonférentielle (XX') tangente à la circonférence du pneumatique un angle Beta, est positionnée intérieurement à la couche rigide et en contact avec elle dans la direction radiale, ledit angle Bêta est supérieur ou égale à 50° en valeur absolue et de même sens que la couche rigide adjacente.

La couche de triangulation est constituée de fils ou câbles métalliques rigides à faible extensibilité faisant avec la direction circonférentielle un angle Beta compris entre 45° et 90°, positionnée entre l'armature de carcasse et la couche rigide qui comprend égalements des renforts rigides faisant un angle avec la direction circonférentielle d'une valeur inférieure à 45° en valeur absolue. Ladit couche de triangulation forme avec la couche rigide une armature triangulée qui présente sous les différentes contraintes qu'elle subit peu de déformations, la couche de triangulation ayant pour rôle essentiel de reprendre les efforts de compression transversale dont est l'objet l'ensemble des éléments de renforcement dans la zone sommet du pneumatique.

Dans ce mode de réalisation, en définitif, le pneumatique comprend une armature de carcasse sur laquelle est positionnée dans la direction radialement extérieure la couche de triangulation, puis l'empilement de la couche rigide et de la couche bas module, le tout étant surmonté par la bande de roulement.

Avantageusement, la largeur axiale de la couche de triangulation, mesurée sur une coupe méridienne du pneumatique, est inférieure à celle de la couche bas module et supérieure à celle de la couche rigide.

La couche bas module a une largeur axiale supérieure à celle de la couche rigide d'au moins 20 mm. Quant à la couche de triangulation sa largeur est définie de manière à réaliser un couplage avec la couche bas module pour limiter les cisaillements aux extrémités axiales afin de se prémunir des problèmes de clivage du sommet. Cette condition mécanique associée à la contrainte d'éviter la coïncidence des extrémités axiales conduit à définir l'extrémité de la couche de triangulation entre extrémités axiales des couches rigide et de bas module.

Préférentiellement, la valeur absolue de l'angle Alpha1 des renforts de la couche bas module est supérieure ou égale la valeur absolue de l'angle Alpha2 des renforts de la couche rigide.

La valeur absolue des angles de la couche bas module et de la couche rigide sont compris tous les deux dans l'intervalle [15°; 40°], mais l'angle de la couche rigide est inférieur à celui de la couche bas module, ce qui signifie qu'il est plus proche de la borne de 15°. En réalité, l'angle Alpha2 de la couche rigide plus proche de la direction circonférentielle est utilisé pour contribuer à la rigidification de la couche rigide dans la direction circonférentielle.

A titre d'illustration, une combinaison d'angles Alpha1 à 24°, et Alpha2 à -20° permet un bon fonctionnement de l'invention.

Selon un mode de réalisation de l'invention, l'armature de sommet comprend au moins une couche de frettage formée des renforts métalliques élastiques dont l'angle avec la direction circonférentielle du pneumatique est inférieur ou égal à 10°.

L'architecture simplifiée du pneumatique de l'invention est compatible avec l'utilisation d'une armature de frettage. Pour des utilisations particulières où les pneumatiques sont fortement sollicités par exemple en dérive, le sommet proposé par l'invention peut être complété par une aramture de frettage.

L'armature de frettage comprend usuellement deux couches de frettage, radialement superposées, formées de renforts métalliques, parallèles entre eux dans chaque couche et croisés d'une couche à la suivante, en formant, avec la direction circonférentielle, des angles au plus égaux à 10°.

L'armature de frettage, dont la fonction est de reprendre au moins en partie les sollicitations mécaniques de gonflage, améliore l'endurance de l'armature de sommet par une rigidification de l'armature de sommet. L'armature de frettage peut être positionnée radialement entre la couche rigide et la couche de bas module de l'armature de travail, ou radialement à l'extérieur de l'armature de travail.

Selon un autre mode de réalisation de l'invention, une couche de mélange élastomérique est positionnée dans a direction radiale vers l'intérieur, en dessous de la couche bas module et en contact avec elle à l'aplomb de l'extrémité de la couche rigide.

Préférentiellement, la couche de mélange élastomérique positionnée radialement en desssous de la couche "bas module" et en contact avec elle à l'aplomb de l'extrémité de la couche rigide a un module de rigidité en extension inférieure ou égale 4.5 MPa.

La couche bas module est celle avec la plus grande largeur axiale, et à ses extrémités axiales les déformations dans les plans méridiens et circonférentiels ont de grandes amplitudes. L'ajout d'une couche de bordure à l'extrémité de la couche de bas module intérieurement dans la direction radiale a l'avantage d'y localiser les déformations de cisaillement. Cette solution permet d'améliorer l'endurance du pneumatique vis-à-vis du clivage.

Dans l'environnement de la couche de mélange ajoutée à la couche de bas module intérieurement dans la direction radiale se trouvent le mélange d'enrobage de la couche de bas module, ainsi que le mélange de bordure qui borde l'extrémité axiale. Le module élastique en extension du mélange accolé à la couche de bas module doit être inférieur à celui des mélanges de l'environnement. Les inventeurs ont observé qu'une valeur du module élastique en extension inférieure ou égale à 4.5 Mpa suffit pour un bon fonctionnement de l'invention.

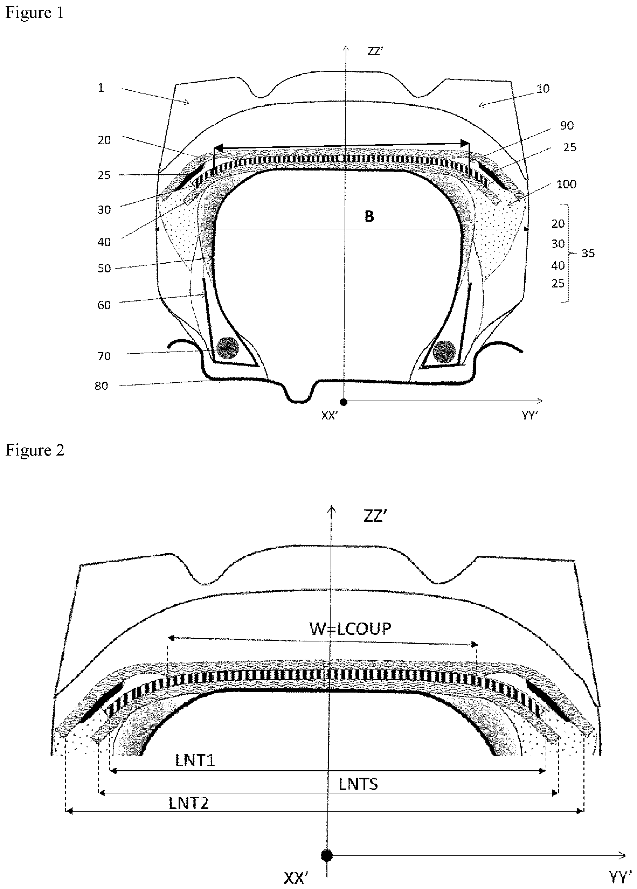

Les caractéristiques de l'invention sont illustrées par les figures 1 et 2 schématiques et non représentées à l'échelle, en référence à un pneumatique de dimension 29.5R25 :
- figure 1 : coupe méridienne du sommet du pneumatique selon l'invention ;
- figure 2 : portion d'une coupe méridienne dudit sommet ;
- figure 3 : illustration de l'assemblage d'un câble tel qu'utilisé dans l'invention.

La figure 1 représente un pneumatique 1 pour véhicule lourd de type génie civil comprenant une armature de sommet 35, radialement intérieure à une bande de roulement 10 et radialement extérieure à une armature de carcasse 50. L'armature de sommet 35 comprenant au moins une couche 20, dite "couche bas module", et au moins une couche 30, dite "couche rigide. Une couche de mélange élastomérique 25 est positionnée radialement du côté intérieur à la couche bas module. La couche de l'armature de sommet la plus radialement intérieure 40, en contact avec l'armature de carcasse 50, est dite couche de tringulation. Les extrémités des couches 20,30, et 40 sont noyées dans un mélange élastomérique de bordure 110. Les deux couches de sommet rigide 30 de bas module 20 sont séparés à leurs extrémités axiales par un mélange de découplage 90.

La figure 2 représente l'armature de sommet 35 avec ses cotes caractéristiques. La couche rigide a une largeur axiale LNT1, et la couche bas module une largeur LNT2. La largeur LNT2 est supérieure à LNT1 de manière à ce que la couche bas module déborde de part et d'autre les extrémités de la couche rigide. Les extrémités axiales de la couche de triangulation de largeur LNTS sont intercalées entre les extrémités axiales des couches bas module et rigide. Afin d'éviter la coïncidence des extrémités axiales des couches de sommet, un décalage d'au moins 10 mm est opéré entre deux couches consécutives. LCOUP est la distance de couplage pour atteindre le niveau maximal de tension dans les renforts des couches sommet.

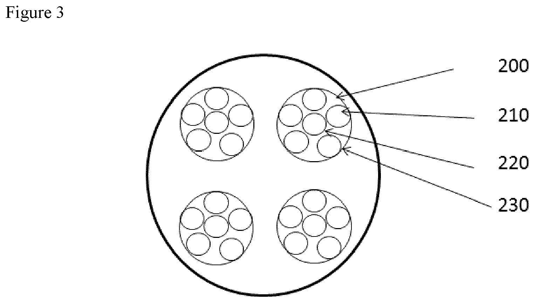

La figure 3 représente un exemple de renforts bas module utilisés pour la couche bas module. Le câble comprend 4 torons 200 enroulés en hélice, chaque toron est constitué d'une couche interne 220 d'un fil, entourés d'une couche externe 230 formée de 4 fils 210 enroulés autour de la couche interne.

Les inventeurs ont comparé un pneumatique selon l'invention I à un pneumatique de référence R dans la même dimension 29.5R25. Le pneumatique de référence est une solution classique de l'état de l'art dont la description est synthétisée dans le tableau 1 suivant :

**[Tableau 1]**

| Armature de sommet du pneumatique de référence | | | | |
|---|---|---|---|---|
| | | Renforts | Assemblage | Angle |
| Armature de protection | Couche 1 | E18.23 | 3×(1+5)×0.23 | -24" |
| | couche 2 | E18.23 | 3×(1+5)×0.23 | 24° |
| Armature de travail | Couche 3 | 13.30 FR | (4+9)×0.30 | -24° |
| | Couche 4 | 13.30 FR | (4+9)×0.30 | 24° |
| Couche de triangulation | Couche 5 | 13.30 FR | (4+9)×0.30 | -65° |

Le tableau 1 décrit les couches constituant le sommet du pneumatique de référence. Les renforts des couches sont des câbles dont l'assemblage est mentionné pour chaque couche. Les angles que font les renforts avec la direction circonférentielle du pneumatique sont également mentionnés.

Les formules des assemblages des câbles se terminant par FR signifient que les câbles sont frettés. Les câbles sont munis d'un fil de frette de diamètre réduit, entre 0.10 mm et 0.3 mm, enroulé en hélice sur la surface externe du câble. Par exemple, le câble 13.30 FR a une frette de 0.18 mm de diamètre.

Le pneumatique de l'invention comprend les composantes décrites dans le tableau 2 ci-dessous :

**[Tableau 2]**

| Armature de sommet du pneumatique de l'invention | | | | | | | | |
|---|---|---|---|---|---|---|---|---|
| | | Renforts | Assemblage | Angle | FR | TR | Modules élastiques | Pas |
| Couche bas module | Cuche 1 | E24,26 | 4×(1+5)×0.26 | 24° | 2600 NI | 1060 N/mm | 42 GPa | 2.5 mm |
| couche rigide | Couche 2 | 26.30 FR | 3×0.35+(4+14)×0.30 | -20° | 6200N | 1800 N/mm | 144 GPa | 2 mm |
| Couche de triangulation | Couche 3 | 13.30 FR | (4+9)×0.30 | -65° | 3000 N | 1500 N/mm | 174 GPa | 3.4mm |

Le tableau 2 décrit les couches constituant le sommet simplifié du pneumatique de l'invention. On retrouve les câbles utilisés comme renforts, leur assemblage, et les angles qu'ils font avec la direction circonférentielle du pneumatique. Des propriétés mécaniques ds couches sont mentionnés : la force de rupture des câbles, la tension de rupture des couches ainsi que le pas axial des renforts pour chaque couche.

Le pneumatique de l'invention, dans la configuration testée ici, diffère de la référence par la suppression de couches de l'armature de sommet pour se limiter à une couche de triangulation radialement la plus intérieure, puis une couche rigide formée de renforts frettés de 26 fils métalliques de 30 centièmes de millimètre chacun, et une couche de bas module formée de 24 fils métalliques d'un diamètre de 26 centièmes de millimètre chacun.

L'assemblage des renforts de la couche de bas module a pour formule 4x(1+5)x0.26, ce qui signifie que les renforts sont des câbles multitorons constitués de 4 torons, chaque toron comprenant une couche interne de 1 fil interne et une couche externe de 5 fils externes enroulés en hélice autour de la couche interne, les fils ayant une section de diamètre 0.26 mm.

Les renforts de la couche de bas module ont un module élastique en extension égal à 42 GPa, une force à rupture égale à 260 daN, sont répartis axialement selon un pas égal à 2.5 mm, et forment, avec la direction circonférentielle XX', un angle Alpha1 de 24°. La tension de rupture de la couche bas module est 106 daN/mm.

Pour ce qui est de la couche rigide, les renforts sont des câbles de trois couches de fils, assemblés selon la formule 3x0.35+(4+14)x0.30. La première couche comprend 3 fils de 0,35mm de diamètre, puis la deuxième 4 fils de diamètre 0.30 mm, et la troisième couche comprend 14 fils de diamètre 0.30 mm. Les renforts ainsi définis ont une force à rupture égale à 620 daN, sont répartis axialement selon un pas égal à 3.4 mm, et forment, avec la direction circonférentielle XX', un angle Alpha1 de -20°. La tension de rupture de la couche rigide est 176 daN/mm.

La couche de triangulation comprend des renforts qui sont des câbles de deux couches de fils, assemblés selon la formule (4+9)x0.30. La première couche comprend 4 fils de 0,30 mm de diamètre, puis la deuxième couche 9 fils de diamètre 0.30 mm. Les renforts ainsi définis ont une force à rupture égale à 300 daN, sont répartis axialement selon un pas égal à 2.0 mm, et forment, avec la direction circonférentielle XX', un angle Alpha1 de -65°. La tension de rupture de la couche de triangulation est 140 daN/mm.

Le pneumatique de l'invention ci-dessus décrit est bien conforme à l'objet du brevet revendiqué. L'objectif visé d'un gain sur le coût de revient indutriel est atteint avec une masse du pneumatique de l'invention plus faible que celle du pneumatique de référence de 7%. Le gain en masse résulte de la suppression dans le pneumatique de référence d'une couche de protection et d'une couche de travail.

La résistance du sommet du pneumatique de l'invention lors du franchissement d'obstacles sur la route est à un niveau comparable à celui du pneumatique de référence. La couche bas module qui est formée de câbles multi-torons en E24.26 élastiques a aussi une fonction de protection avec un niveau de performance suffisant pour remplacer les deux couches de l'armature de protection en E18.23 du sommet du pneumatique de référence.

L'endurance a été évaluée par des calculs par éléments finis sur les pneumatiques de référence et de l'invention, permettant de calculer les tensions dans la couche de carcasse, et les cisaillements aux extrémités des couches de l'armature de sommet.

Pour évaluer ces performances, le pneumatique a été sousmis à des calculs avec une charge verticale de 14 000 kg, une poussée de dérive de 6000 daN, et une pression de gonflage de 450 kPa.

Dans la version du pneumatique avec la couche de triangulation, la couche de carcasse est toujours en extension relative, ce qui écarte les risque de flambage. Les cisaillements aux extrémités des couches du sommet sont suffisamment faibles pour ne pas dégrader l'endurance.

L'invention permet d'alléger le pneumatique tout en permettant de transmettre les efforts pour guider le véhicule sans altérer l'intégrité des mélanges aux extrémités axiales des couches.

## Revendications

1. Pneumatique (1) pour véhicule lourd de type génie civil, le pneumatique ayant une section nominale B au sens de la norme technique européenne pour les jantes et les pneumatiques - selon www.etrto.org, Standard Manual - et comprenant une armature de sommet (35), radialement intérieure à une bande de roulement (10) et radialement extérieure à une armature de carcasse (50), ladite armature de sommet (35) comprenant :
-) au moins une couche, ci-après désignée "couche bas module" (20), formée de renforts métalliques élastiques dits de bas module, enrobés dans un matériau élastomérique, parallèles entre eux et formant, avec une direction circonférentielle (XX') tangente à la circonférence du pneumatique un angle Alpha1, lesdits renforts de bas module ayant un allongement structural au moins égal à 0.4%, et un allongement total à rupture au moins égal à 3%, et le module élastique en extension de ces renforts étant compris entre 40 GPa et 130 GPa ;
-) au moins une couche, ci-après désignée "couche rigide" (30), formée de renforts métalliques rigides, enrobés dans un matériau élastomérique, parallèles entre eux et formant, avec une direction circonférentielle (XX') tangente à la circonférence du pneumatique, un angle Alpha2, l'allongement structural des renforts métalliques rigides, étant inférieure ou égale à 0.2 % et le module élastique en extension des renforts rigides étant compris entre 140 GPa et 200 GPa,
**caractérisé en ce que** la tension de rupture de la couche rigide (30) est supérieure ou égale à 120 daN/mm, **en ce que** le rapport de la tension de rupture de la couche rigide(30) sur celle de la couche bas module (20) est supérieur ou égal à 1.2, préférentiellement supérieur ou égale à 1.4, **en ce que** la tension de rupture de la couche bas module (20) est supérieure ou égale à 80 daN/mm, **et en ce que** au moins une couche bas module (20) est en contact avec au moins une couche rigide (30) sur une largeur axiale W au moins égale à 20 % de la section nominale B du pneumatique.

2. Pneumatique (1) pour véhicule lourd de type génie civil selon la revendication 1, **dans lequel** la couche rigide (30) comprend des renforts munis d'un fil de frette de diamètre réduit, entre 0.10 mm et 0.3 mm, enroulé en hélice sur la surface externe du renfort.

3. Pneumatique (1) pour véhicule lourd de type génie civil selon la revendication 2, **dans lequel** la couche "bas module (20)" est positionnée extérieurement à la couche rigide dans la direction radiale.

4. Pneumatique (1) pour véhicule lourd de type génie civil selon l'une des revendications 1 à 3, **dans lequel** la largeur axiale de la couche "bas module " (20) est supérieure à la largeur axiale de la couche rigide d'une distance DNT au moins égale à 10 mm à chaque extrémité axiale.

5. Pneumatique (1) pour véhicule lourd de type génie civil selon l'une des revendications 1, à 4 **dans lequel** une couche supplémentaire (40), ci-après désigné couche de triangulation, comprenant des renforts métalliques, enrobés dans un matériau élastomérique, parallèles entre eux et formant, avec une direction circonférentielle (XX') tangente à la circonférence du pneumatique un angle Beta, est positionnée intérieurement à la couche rigide (30) et en contact avec elle dans la direction radiale, ledit angle Beta_est supérieur ou égale à 50° en valeur absolue, et de même sens que la couche rigide adjacente.

6. Pneumatique (1) pour véhicule lourd de type génie civil selon la revendication 5, **dans lequel** la largeur axiale LNTS de la couche de triangulation (40), mesurée sur une coupe méridienne du pneumatique, est inférieure à la largeur axiale LNT2 de la couche bas module (20) et supérieure à la largeur axiale LNT1 de la couche rigide (30).

7. Pneumatique (1) pour véhicule lourd de type génie civil selon l'une des revendications 1 à 6, **dans lequel** la valeur absolue de l'angle des renforts Alpha1 de la couche "bas module " (20) est supérieur ou égal à la valeur absolue de l'angle Alpha2 de la couche rigide (30).

8. Pneumatique (1) pour véhicule lourd de type génie civil selon l'une des revendications 1, à 7, **dans lequel** l'armature de sommet (35) comprend au moins une couche (20) formée des renforts métalliques élastiques dont l'angle Alpha1 avec la direction circonférentielle du pneumatique est inférieur ou égal à 10°.

9. Pneumatique (1) pour véhicule lourd de type génie civil selon l'une des revendications 1, à 8, **dans lequel** une couche de mélange élastomérique (25) est positionnée dans a direction radiale vers l'intérieur en dessous de la couche bas module (20) et en contact avec elle à l'aplomb de l'extrémité de la couche rigide.

10. Pneumatique (1) pour véhicule lourd de type génie civil selon l'une des revendications 1, à 9, **dans lequel** la couche de mélange élastomérique (25) positionnée radialement en desssous de la couche "bas module" (20) et en contact avec elle à l'aplomb de l'extrémité de la couche rigide a un module de rigidité en extension inférieure ou égale 4.5 MPa.

## Patentansprüche

1. Reifen (1) für ein Schwerlastbaufahrzeug, wobei der Reifen einen Nennquerschnitt B im Sinne der europäischen technischen Norm für Felgen und Reifen - gemäß www.etrto.org, Standard Manual - aufweist und eine Gürtelverstärkung (35), radial innerhalb eines Laufstreifens (10) und radial außerhalb einer Karkassenverstärkung (50), umfasst, wobei die Gürtelverstärkung (35) umfasst:
- mindestens eine Lage, nachstehend als "niedrigmodulige Lage" (20) bezeichnet, die aus niedrigmodulig genannten elastischen metallischen Festigkeitsträgern gebildet wird, die parallel zueinander sind und mit einer den Umfang des Reifens tangierenden Umfangsrichtung (XX') einen Winkel Alpha1 bilden, wobei die niedrigmoduligen Festigkeitsträger eine strukturelle Längung von mindestens 0,4 % und eine Gesamtbruchlängung von mindestens 3 % aufweisen und der Elastizitätsmodul bei Dehnung dieser Festigkeitsträger zwischen 40 GPa und 130 GPa beträgt;
- mindestens eine Lage, nachstehend als "steife Lage" (30) bezeichnet, die aus steifen metallischen Festigkeitsträgern gebildet wird, die in ein Elastomermaterial eingebettet sind, parallel zueinander sind und mit einer den Umfang des Reifens tangierenden Umfangsrichtung (XX') einen Winkel Alpha2 bilden, wobei die strukturelle Längung der steifen metallischen Festigkeitsträger kleiner als oder gleich 0,2 % ist und der Elastizitätsmodul bei Dehnung der steifen Festigkeitsträger zwischen 140 GPa und 200 GPa beträgt,
**dadurch gekennzeichnet, dass** die Bruchspannung der steifen Lage (30) größer als oder gleich 120 daN/mm ist, dass das Verhältnis der Bruchspannung der steifen Lage (30) zu der der niedrigmoduligen Lage (20) größer als oder gleich 1,2, bevorzugt größer als oder gleich 1,4 ist, dass die Bruchspannung der niedrigmoduligen Lage (20) größer als oder gleich 80 daN/mm ist und dass mindestens eine niedrigmodulige Lage (20) über eine axiale Breite W von mindestens 20 % des Nennquerschnitts B des Reifens in Kontakt mit mindestens einer steifen Lage (30) ist.

2. Reifen (1) für ein Schwerlastbaufahrzeug nach Anspruch 1, bei dem die steife Lage (30) Festigkeitsträger umfasst, die mit einem Bandagierungsdraht mit reduziertem Durchmesser, zwischen 0,10 mm und 0,3 mm, versehen sind, der gewendelt auf die Außenfläche des Festigkeitsträgers gewickelt ist.

3. Reifen (1) für ein Schwerlastbaufahrzeug nach Anspruch 2, bei dem die "niedrigmodulige" Lage (20) in radialer Richtung außerhalb der steifen Lage angeordnet ist.

4. Reifen (1) für ein Schwerlastbaufahrzeug nach einem der Ansprüche 1 bis 3, bei dem die axiale Breite der "niedrigmoduligen" Lage (20) um einen Abstand DNT von mindestens 10 mm an jedem axialen Ende größer als die axiale Breite der steifen Lage ist.

5. Reifen (1) für ein Schwerlastbaufahrzeug nach einem der Ansprüche 1 bis 4, bei dem eine zusätzliche Lage (40), nachstehend als Triangulationslage bezeichnet, die metallische Festigkeitsträger umfasst, die in ein Elastomermaterial eingebettet sind, parallel zueinander sind und mit einer den Umfang des Reifens tangierenden Umfangsrichtung (XX') einen Winkel Beta bilden, innerhalb der steifen Lage (30) und in radialer Richtung in Kontakt mit ihr angeordnet ist, wobei der Winkel Beta vom absoluten Wert her größer als oder gleich 50° ist und den gleichen Richtungssinn wie die benachbarte steife Lage hat.

6. Reifen (1) für ein Schwerlastbaufahrzeug nach Anspruch 5, bei dem die axiale Breite LNTS der Triangulationslage (40), gemessen an einem Meridianschnitt des Reifens, kleiner als die axiale Breite LNT2 der niedrigmoduligen Lage (20) und größer als die axiale Breite LNT1 der steifen Lage (30) ist.

7. Reifen (1) für ein Schwerlastbaufahrzeug nach einem der Ansprüche 1 bis 6, bei dem der absolute Wert des Winkels der Festigkeitsträger Alpha1 der "niedrigmoduligen" Lage (20) größer als oder gleich dem absoluten Wert des Winkels Alpha2 der steifen Lage (30) ist.

8. Reifen (1) für ein Schwerlastbaufahrzeug nach einem der Ansprüche 1 bis 7, bei dem die Gürtelverstärkung (35) mindestens eine Lage (20) umfasst, die aus elastischen metallischen Festigkeitsträgern gebildet wird, deren Winkel Alpha1 mit der Umfangsrichtung des Reifens kleiner als oder gleich 10° ist.

9. Reifen (1) für ein Schwerlastbaufahrzeug nach einem der Ansprüche 1 bis 8, bei dem eine Lage aus Elastomermischung (25) in radialer Richtung nach innen hin unter der niedrigmoduligen Lage (20) und in der Senkrechten über dem Ende der steifen Lage in Kontakt mit ihr angeordnet ist.

10. Reifen (1) für ein Schwerlastbaufahrzeug nach einem der Ansprüche 1 bis 9, bei dem die Lage aus Elastomermischung (25), die radial unter der "niedrigmoduligen" Lage (20) und in der Senkrechten über dem Ende der steifen Lage in Kontakt mit ihr angeordnet ist, einen Steifigkeitsmodul bei Dehnung kleiner als oder gleich 4,5 MPa hat.

## Claims

1. Tyre (1) for a heavy-duty vehicle of construction plant type, having a nominal section B within the meaning of the European Tyre and Rim Technical Organisation according www.etrto.org, Standard Manual, and comprising a crown reinforcement (35), radially on the inside of a tread (10) and radially on the outside of a carcass reinforcement (50), said crown reinforcement (35) comprising:
-) at least one layer (20), denoted "low-modulus layer" below, formed of what are known as low-modulus elastic metal reinforcers, which are coated in an elastomeric material, are mutually parallel and form an angle Alpha1 with a circumferential direction (XX') tangential to the circumference of the tyre, said low-modulus reinforcers having a structural elongation at least equal to 0.4% and a total elongation at break at least equal to 3%, and the tensile elastic modulus of these reinforcers being between 40 GPa and 130 GPa;
-) at least one layer (30), denoted "rigid layer" below, formed of rigid metal reinforcers, which are coated in an elastomeric material, are mutually parallel and form an angle Alpha2 with a circumferential direction (XX') tangential to the circumference of the tyre, the structural elongation of the rigid metal reinforcers being less than or equal to 0.2% and the tensile elastic modulus of the rigid reinforcers being between 140 GPa and 200 GPa,
**characterized in that** the breaking tension of the rigid layer (30) is greater than or equal to 120 daN/mm, **in that** the ratio of the breaking tension of the rigid layer to that of the low-modulus layer is greater than or equal to 1.2, preferably greater than or equal to 1.4, **in that** the breaking tension of the low-modulus layer (20) is greater than or equal to 80 daN/mm, **and in that** at least one low-modulus layer is in contact with at least one rigid layer over an axial width W at least equal to 20% of the nominal section of the tyre.

2. Tyre (1) for a heavy-duty vehicle of construction plant type according to Claim 1, **wherein** the rigid layer (30) comprises reinforcers provided with a wrapping thread of small diameter, between 0.10 mm and 0.3 mm, wound in a helix on the external surface of the reinforcer.

3. Tyre (1) for a heavy-duty vehicle of construction plant type according to Claim 2, **wherein** the "low-modulus" layer (20) is positioned on the outside of the rigid layer in the radial direction.

4. Tyre (1) for a heavy-duty vehicle of construction plant type according to one of Claims 1 to 3, **wherein** the axial width of the "low-modulus" layer (20) is greater than the axial width of the rigid layer by a distance DNT at least equal to 10 mm at each axial end.

5. Tyre (1) for a heavy-duty vehicle of construction plant type according to one of Claims 1 to 4, **wherein** an additional layer (40), denoted triangulation layer below, comprising metal reinforcers, which are coated in an elastomeric material, are mutually parallel and form an angle Beta with a circumferential direction (XX') tangential to the circumference of the tyre, is positioned on the inside of the rigid layer (30) and in contact therewith in the radial direction, said angle Beta being greater than or equal to 50° in terms of absolute value, and in the same direction as the adjacent rigid layer.

6. Tyre (1) for a heavy-duty vehicle of construction plant type according to Claim 5, **wherein** the axial width, LNTS, of the triangulation layer (40), measured in a meridian cross section of the tyre, is less than that of the low-modulus layer, LNT2, and greater than that of the rigid layer, LNT1.

7. Tyre (1) for a heavy-duty vehicle of construction plant type according to one of Claims 1 to 6, **wherein** the absolute value of the angle Alpha1 of the reinforcers of the "low-modulus" layer (20) is greater than or equal to the absolute value of the angle Alpha2 of the rigid layer (30).

8. Tyre (1) for a heavy-duty vehicle of construction plant type according to one of Claims 1 to 7, **wherein** the crown reinforcement (35) comprises at least one layer (20) formed of elastic metal reinforcers, the angle, Alpha1, of which with the circumferential direction of the tyre is less than or equal to 10°.

9. Tyre (1) for a heavy-duty vehicle of construction plant type according to one of Claims 1 to 8, **wherein** a layer of elastomeric compound (25) is positioned towards the inside in the radial direction beneath the low-modulus layer (20) and in contact with the latter vertically in line with the end of the rigid layer.

10. Tyre (1) for a heavy-duty vehicle of construction plant type according to one of Claims 1 to 9, **wherein** the layer of elastomeric compound (25) positioned radially beneath the "low-modulus" layer (20) and in contact with the latter vertically in line with the end of the rigid layer has a tensile stiffness modulus less than or equal to 4.5 MPa.
